# EUROPÄISCHE PATENTSCHRIFT

(11) **EP 1 181 818 B1**
(45) Veröffentlichungstag und Bekanntmachung des Hinweises auf die Patenterteilung: **30.07.2003**
(21) Anmeldenummer: 00945537.9
(22) Anmeldetag: 19.05.2000
(51) Int. Cl.: H04N 5/45, H04N 5/44

(54) **VERFAHREN UND SCHALTUNGSANORDNUNG ZUR VIDEOBILDEINBLENDUNG**
METHOD AND CIRCUIT ARRANGEMENT FOR PICTURE-IN-PICTURE SUPERIMPOSITION OF A VIDEO IMAGE
PROCEDE ET CIRCUIT POUR REALISER UNE SUPERPOSITION D'IMAGE VIDEO

(30) Priorität: 21.05.1999 DE 19923519
(43) Veröffentlichungstag der Anmeldung: 27.02.2002
(73) Patentinhaber: Infineon Technologies AG, 81669 München (DE)
(72) Erfinder: WENDEL, Dirk, D-82008 Unterhaching (DE); BURKERT, Matthias, D-80689 München (DE); BRETT, Maik, D-81539 München (DE)
(74) Vertreter: Banzer, Hans-Jörg, Dipl.-Ing.
(86) Internationale Anmeldenummer: DE0001616
(87) Internationale Veröffentlichungsnummer: WO00072587

(56) Entgegenhaltungen:
- EP-A- 0 573 280
- EP-A- 0 766 463
- EP-A- 0 913 993

## Beschreibung

Die Erfindung betrifft ein Verfahren zur Einblendung eines Einblendbildes in ein Videobild, wie beispielsweise ein Fernsehbild. Die Erfindung betrifft darüber hinaus eine Schaltungsanordnung, mit der ein Verfahren zur Videobildeinblendung durchgeführt werden kann. Bei einer Videobildeinblendung wird innerhalb des eigentlichen Videobildes ein weiteres Bild angezeigt. Das Signal für ein solches Einblendbild kann von einer Empfangseinheit in einem Fernsehempfänger, einer Videokamera, einem Videorecorder, einem Computer oder einer anderen Videosignalquelle stammen.

Bei Fernsehempfängern erlaubt diese Funktion, die auch als Bild-in-Bild-Einblendung (picture-in-picture, PiP) bezeichnet wird, daß neben der Sendung eines eingestellten Programmes über einen Ausschnitt des Fernsehbildschirmes eine weitere Sendung verfolgt werden kann. Die Größe des Ausschnitts und seine Position innerhalb des Bildschirms sind oft einstellbar. Die relative Größe des Ausschnitts zur Größe des sichtbaren Bildschirms bestimmt, wieviel vom Bildinhalt des eigentlichen Videobildes durch das Einblendbild verdeckt wird.

Schaltungsanordnungen zu Videobildeinblendungen enthalten neben dem Eingang für das Videosignal einen zusätzlichen Eingang für das Signal des Einblendbildes. Mit einem Umschalter wird zwischen diesen Signalen so umgeschaltet, daß bei einer bestimmten Zeile und bei einem bestimmten Zeilenabschnitt dem Bildschirm oder einer anderen Anzeigevorrichtung das passende Signal zugeführt wird und sich das angezeigte Bild aus dem Videobild mit dem Einblendbild zusammensetzt. Eine solche Schaltungsanordnung ist beispielsweise aus der DE 195 34 781 C! bekannt.

Videobilder können verschieden Bildformate aufweisen. Für Fernsehbilder findet das Format 4:3 weltweit Verwendung. Die Formatangabe besagt, daß sich die horizontale Länge zur vertikalen Breite wie 4:3 verhält. Für gewöhnlich strahlen die Fernsehanstalten ihre Programme in diesem 4:3 Bildformat aus. Ein weiteres übliches Format ist das 16:9 Format, bei dem das Seitenverhältnis dem von Kinofilmen näherkommt.

Auch Sendungen, die das 16:9 Format aufweisen, werden im 4:3 Format ausgestrahlt. Übliche Fernsehempfänger empfangen diese Sendungen in der gleichen Weise wie 4:3 Sendungen. Schwarze Balken am oberen und unteren Bildrand oder auch breite Balkennur nur am unteren oder nur am oberen Bildrand füllen dann die Bereiche des Fernsehbildes im 4:3 Format aus, die bei einer formatrichtigen Wiedergabe von 16:9 Sendungen nicht genutzt werden.

Auch die Fenster für die Einblendbilder bei Bild-in-Bild-Anwendungen weisen näherungsweise das Bildformat 4:3 auf. Wird ein Einblendbild, das ebenfalls im 4:3 Format vorliegt, in das eigentliche Videobild eingeblendet, so kann das Einblendbild nach einer Dezimation, die das Seitenverhältnis beibehält, formatfüllend in dem Fenster dargestellt werden, ohne daß das Einblendbild in einer Bildrichtung gestaucht oder gestreckt werden muß. Das Format des Bildschirms spielt dabei keine Rolle.

Wird in dem Einblendbild eine Sendung im 16:9 Format dargestellt, so erscheinen im Fenster aus den vorhergenannten Gründen am oberen und unteren Rand des Einblendbildes schwarze Balken. Diese Balken wirken auf einen Betrachter des Bildschirms störend, insbesondere, da sie im eigentlichen Videobild auftauchen. Durch die Balken werden Bereiche des eigentlichen Videobildes mit einem Bildinhalt des Einblendbildes überdeckt, der in der Regel keine den Betrachter interessierende Information enthält.

EP-A-0 573 280 offenbart ein Verfahren gemäß Oberbegriff des Anspruchs 1.

EP-A-0 766 463 und EP-A-0 913 993 offenbaren Verfahren zur Wiedergabe von zusätzlichen Informationen in freien Zonen bei der Letter-Box Darstellung.

Aufgabe der vorliegenden Erfindung ist es, den Bildeindruck bei Videobildeinblendungen von Bildinhalten mit einem beliebigen Bildformat in ein Fenster mit einem vorgegebenen Bildformat zu verbessern.

Diese Aufgabe wird mit einem Verfahren mit den Merkmalen des Anspruchs 1 gelöst. Die Aufgabe wird zudem mit einer Schaltungsanordnung mit den Merkmalen des Anspruches 7 gelöst.

Die Erfindung hat den Vorteil, daß der Bildeindruck des gesamten auf einem Bildschirm dargestellten Bildes verbessert wird. Auf dem Bildschirm treten keine oder nur in verringertem Maße Bereiche auf, die keine einen Betrachter interessierenden Inhalte aufweisen.

Es kann zweckmäßig sein, nicht alle Füllzeilen zu unterdrükken, sondern beispielsweise nur diejenigen, die sich am unteren Bildrand des Einblendbildes befinden. Der obere schwarze Balken kann für zusätzliche Informationen über das Einblendbild, wie beispielsweise eine Angabe über die Quelle des Videosignals für das Einblendbild ("Kamera 1", "Kamera 2", ..) benutzt werden. Selbstverständlich kann dazu auch der untere schwarze Balken dienen.
Weist das Zweitbild nur einen schwarzen (breiten) Balken auf, kann es sinnvoll sein, nur einen Teil der Füllzeilen zu unterdrücken, um beispielsweise Einblendungen innerhalb des Balkens zu erhalten.

Es kann sich auch als zweckmäßig erweisen, Zusatzeinblendungen von einem Zusatzsignal, das beispielsweise von einem Zeichengenerator, wie er bei Teletextdekodern üblich ist und auch für Bildschirmmenues verwendet wird, geliefert wird, in das Unterbild zu verschieben. Eine solche Zusatzeinblendung kann z. B. ein Symbol für einen Zweikanalton oder der Name einer Fernsehanstalt sein. Befindet sich die es Symbol innerhalb der Bereiche des Zweitbildes, die nicht zu dem Einblendbild gehören, so wird diese Information auf dem Bildschirm nicht angezeigt. Durch entsprechende Ansteuerung des Zeichengenerators wird das Symbol innerhalb der Bildzeilen des Zweitbildes eingeblendet. Das Symbol wird also dargestellt, auch wenn die Füllzeilen nicht im Hauptbild erscheinen.

Bei einer bevorzugten Ausführungsform wird das Bildformat des Unterbildes ermittelt und zur Bestimmung der Füllzeilen verwendet. Wenn die Größe und das Bildformat des Zweitbildes sowie das Bildformat des Unterbildes bekannt sind, ist die Anzahl der Füllzeilen bei einem bestimmten Format des Bildschirms des Fernsehempfängers eindeutig festgelegt.

Das Bildformat des Unterbildes kann aus der Formatinformation, die mit dem zweiten Videosignal zur Sendung übertragen wird, abgeleitet werden. Die Formatinformation beschreibt das Bildformat der Sendung.

Schließlich ist es möglich, daß eine Eingabevorrichtung vorgesehen wird, über die ein Bildformat vorgewählt werden kann. Im einfachsten Fall ist beispielsweise bei der Fernbedienung zu einem Fernsehempfänger eine Taste vorhanden, mit der zwischen dem 4:3 und dem 16:9 Format umgeschaltet werden kann.

Schließlich kann es zweckmäßig sein, das Zweitbild zu stauchen oder zu dehnen. In vertikaler Richtung erhält man eine Stauchung, indem man nur jede n-te Zeile verwendet, eine Dehnung, indem man durch Interpolation der vorhandenen Zeilen weitere hinzunimmt. In horizontaler Bildrichtung erhält man eine Stauchung, indem man nur jedem n-ten Bildpunkt einer jeden Zeile verwendet, eine Dehnung, indem man zwischen vorhandene Bildpunkte weitere hinzunimmt.

Weitere vorteilhafte Aus- und Weiterbildungen sind in den abhängigen Ansprüchen gekennzeichnet.

Die Erfindung wird nachfolgend anhand von Figuren näher erläutert. Entsprechende Elemente sind mit gleichen Bezugszeichen versehen. Es zeigen:
Figur 1 eine schematische Darstellung einer Bildeinblendung und
Figur 2 erfindungsgemäße Schaltungsanordnungen zur Bildeinblendung.

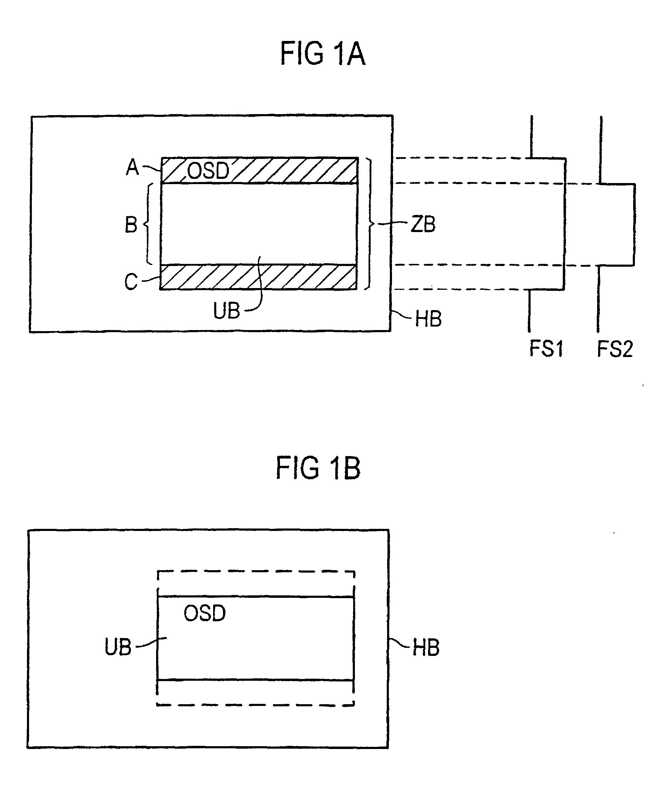

Gemäß der beispielhaften Darstellung nach Figur 1 ist in ein Hauptbild HB ein Zweitbild ZB eingeblendet. Das Hauptbild HB wird von einem ersten Videosignal VS1, das Zweitbild ZB von einem zweiten Videosignal VS2 übertragen. Beide Signale können von derselben oder von unterschiedlichen Videosignalquellen stammen. Das Zweitbild ZB kann jede beliebige Position innerhalb des Hauptbildes HB einnehmen. Beispielhaft wird davon ausgegangen, daß das Zweitbild ZB in einem Bildformat von 4:3 übertragen wird. Das bedeutet, daß es in horizontaler Bildrichtung 4 Längeneinheiten und in vertikaler Bildrichtung 3 Längeneinheiten aufweist. In dem Zweitbild ZB wird ein Unterbild UB dargestellt, das ein vom Bildformat des Zweitbildes abweichendes Bildformat besitzt. In diesem Beispiel sei angenommen, daß das Unterbild UB das Bildformat 16:9 aufweist. Dieses Format ist auch unter der Bezeichnung Breitbandformat bekannt. Da das Unterbild UB vollständig im Zweitbild ZB enthalten ist, ist seine Fläche kleiner als die des Zweitbildes ZB.

Das Zweitbild ZB ist wie bei Videobildern üblich, aus Zeilen zusammengesetzt. Die Zeilen, die das Unterbild UB bilden, sind im folgenden als Bildzeilen BZ bezeichnet. Sie enthalten die eigentliche Bildformation, die mit dem Zweitbild ZB übertragen wird. Die Fläche des Zweitbildes ZB, die nicht von den Bildzeilen BZ des Unterbildes UB ausgefüllt wird, stellen Füllzeilen FZ dar. Bei Fernsehsendungen wird das Zweitbild ZB üblicherweise derart übertragen, daß das Unterbild UB innerhalb des Zweitbildes ZB bezüglich der vertikalen Bildrichtung mittig angeordnet ist. Die Füllzeilen FZ schließen sich in vertikaler Bildrichtung oberhalb und unterhalb des Unterbildes UB an. Die Füllzeilen FZ werden in der Regel schwarz getastet, so daß auf einem Bildschirm neben dem Hauptbild HB das Unterbild UB mit einem oberen schwarzen Balken A und einem unteren schwarzen Balken C erscheint. In der Figur 1A ist der Bereich des Zweitbildes, der von den Bildzeilen BZ des Unterbildes UB eingenommen wird, als Bereich B bezeichnet.

Erfindungsgemäß ist vorgesehen, daß nicht alle Zeilen des Zweitbildes ZB, sondern nur die Bildzeilen BZ und höchstens ein Teil der Füllzeilen FZ in das Hauptbild HB eingeblendet werden. Das Hauptbild HB wird also nur von den Bildzeilen BZ des Unterbildes UB und höchstens einem Teil der Füllzeilen FZ überdeckt. Dabei ist der Fall mit eingeschlossen, daß einige wenige Bildzeilen BZ bei der Einblendung nicht berücksichtigt werden, z. B. wenn wegen Ungenauigkeiten bei einer Ermittlung der Füllzeilen auch Bildzeilen als Füllzeilen interpretiert weden oder bei einer Formatanpassung des Unterbildes durch Weglassen von Bildzeilen am Bildrand.
Füllzeilen treten dann auf, wenn das Verhältnis des Bildformates des Unterbildes UB größer ist als das Verhältnis des Bildformates des Zweitbildes ZB. In diesem Sinne ist das Bildformat 16:9 größer als das Bildformat 4:3, das dem Bildformat 12:9 entspricht. Bei der Darstellung nach Figur 1B sind die Bereiche der Füllzeilen FZ gestrichelt dargestellt.

In der Figur 1 ist im oberen Balken A eine Zusatzeinblendung OSD vorhanden. Diese wird empfängerseitig erzeugt und stammt beispielsweise von einem Zeichengenerator. In der Regel werden diese Zusatzeinblendungen bei einer bestimmten Position am oberen Rand des Zweitbildes ZB eingeblendet. Häufig handelt es sich dabei um Symbole, die den Empfang von Zweikanalton oder Information über bestimmte Parameter signalisieren. Werden die Füllzeilen FZ nicht eingeblendet, so wird auch die Zusatzeinblendung nicht angezeigt. Als Ausführungsbeispiel ist daher vorgesehen, daß die Zusatzeinblendung OSD so verschoben wird, daß sie innerhalb des Unterbildes UB eingefügt wird. Die Figur 1B zeigt eine solche mögliche Position für die Zusatzeinblendung OSD.

Um die Einblendung aller Füllzeilen oder des Teils der Füllzeilen FZ zu unterdrücken, müssen diese erst ermittelt werden. Die Füllzeilen FZ können direkt aus dem Videosignal für das Zweitbild ZB bestimmt werden oder aus dem Bildformat des Unterbildes UB, das zuvor bestimmt werden muß, abgeleitet werden.

Durch Auswertung eines Luminanzanteils im Videosignal für das Zweitbild ZB, dessen Pegel den Helligkeitswert eines jeden Bildpunktes des Zweitbildes bestimmt, können die Füllzeilen FZ detektiert werden. Diese werden nämlich als zusammenhängende schwarze Zeilen innerhalb des Zweitbildes ZB übertragen. Bei einer üblichen Sendung weisen mit hoher Wahrscheinlichkeit bei mehreren Unterbildern die Bereiche A und C einen anderen Helligkeitswert auf als der Bereich B. Beispielsweise von einer Schwellwertschaltung wird der Luminanzanteil überprüft. Erreicht er für eine festgelegte Anzahl von zusammenhängenden Zeilen, die sich innerhalb eines gewissen Abstandes am oberen und unteren Rand des Zweitbildes befinden, einen Luminanzanteil auf, der über einer festgelegten Schwelle liegt, so wird davon ausgegangen, daß es sich bei diesen Zeilen um Füllzeilen FZ handelt. Dabei wird angenommen, daß schwarze Zeilen einen hohen Wert des Luminanzanteils und hellere Zeilen einen niedrigeren Wert aufweisen. Nur wenn Bildzeilen BZ detektiert werden, wird ein bestimmter Pegel eines Bildformatsignals FS eingestellt. Nur wenn wiederum dieser Pegel vorliegt, werden Zeilen des Zweitbildes ZB in das Hauptbild HB eingeblendet. In der Figur 1 ist ein erstes Bildformatsignal FS 1 dargestellt. Es steuert die Einblendung des vollständigen Zweitbildes ZB. Ein zweites Bildformatsignal FS2, in der Figur 1B gezeigt, veranlaßt lediglich die Einblendung der Bildzeilen des Unterbildes UB.

Sind die Größe des Zweitbildes ZB und sein Bildformat bekannt, so können die Füllzeilen FZ mit Hilfe des Bildformats des Unterbildes UB ermittelt werden. Die durch die Bereiche A und C sich ergebende Fläche ist dann geometrisch eindeutig festgelegt. Befindet sich das Unterbild UB genau in der Mitte des Zweitbildes ZB, ist auch die Position der Balken A und C eindeutig.

Teilweise wird bei Sendungen mit dem Fernsehsignal eine Formatinformation übertragen, die angibt, in welchem Format die Sendung vorliegt. Diese Formatinformation wird durch eine geeignete Schaltung ausgewertet, um so die Kenntnis des Bildformats des Unterbildes UB zu gewinnen.

Eine andere Möglichkeit, das Bildformat des Unterbildes UB zu bestimmen, liegt darin, durch Untersuchung des Luminanzpegels des Videosignals die Bereiche A, B und C im Zweitbild ZB festzulegen, wie es weiter oben bereits erläutert wurde. Diese Verfahren sind mit der Bezeichnung Letterbox-Detektion bekannt. Ein solches Verfahren ist im einzelnen z. B. in der US 5,486,871 beschrieben.

Ferner kann vorgesehen sein, daß das Bildformat des Unterbildes UB von einem Fernsehzuschauer über ein Kontrollmittel eingegeben wird. Der Fernsehzuschauer entnimmt beispielsweise einer Fernsehzeitschrift das Bildformat und wählt zwischen vorgegebenen Bildformaten über eine Fernbedienung das gewünschte an. Schließlich kann er auch probeweise zwischen verschiedenen Bildformaten umschalten und dasjenige schließlich beibehalten, bei dem er den besten Bildeindruck von dem Einblendbild erhält.

Ein um das Zweitbild ZB eventuell vorgesehener Rahmen muß natürlich angepaßt werden, wenn nicht alle oder gar keine Füllzeilen eingeblendet werden, so daß der Rahmen nur die Zeilen des Zweitbildes umschließt, die im Hauptbild HB zu sehen sind.

Das Verfahren eignet sich insbesondere bei der Einblendung von mehreren Einblendbildern. Wird jeweils nur das Unterbild UB in das Hauptbild eingeblendet, so wird für jedes einzelne Bild weniger Platz benötigt. Auf einer bestimmten Fläche des Hauptbildes können dann mehr Unterbilder eingeblendet werden.

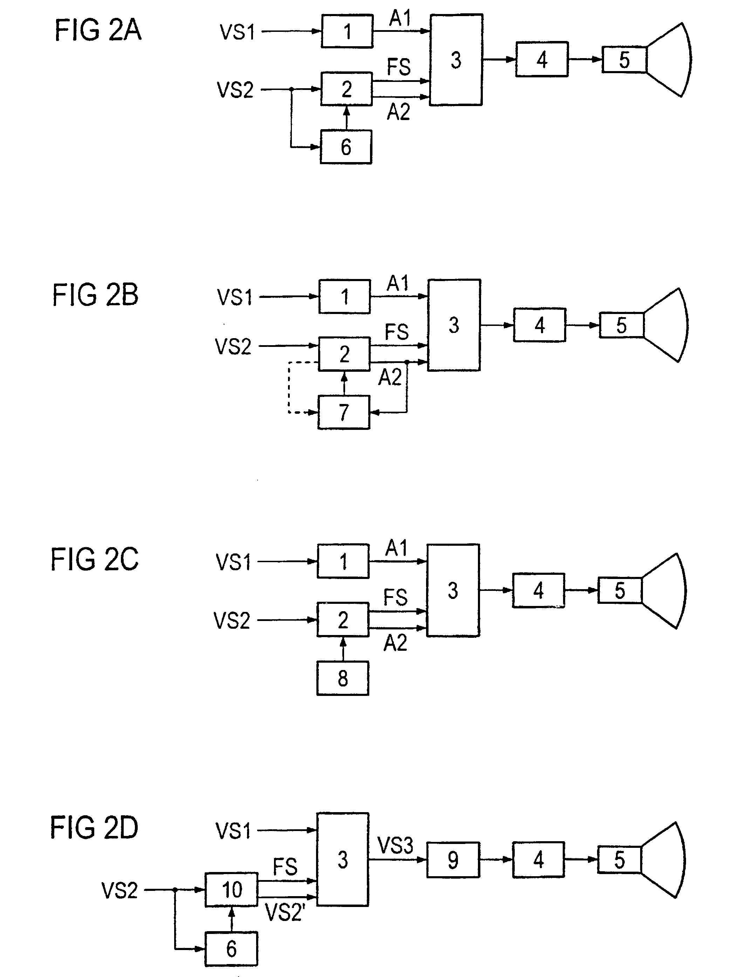

Gemäß Figur 2A enthält eine erste erfindungsgemäße Schaltung eine Hauptverarbeitungseinheit 1, der das erste Videosignal VS1 zugeführt wird, und eine Zweitverarbeitungseinheit 2, der das zweite Videosignal VS2 zugeführt wird. Die Verarbeitungseinheiten 1 und 2 sind mit Eingängen einer Umschaltvorrichtung 3 verbunden, die ausgangsseitig an eine Bildanzeigeansteuereinheit 4 angeschlossen ist. Diese erzeugt ein Bildansteuersignal, mit dem eine Bildanzeigevorrichtung 5, z. B. eine Kathodenstrahlröhre oder ein TFT-Bildschirm, zur Darstellung des Hauptbildes und des Einblendbildes ansteuerbar ist.

Das zweite Videosignal wird zudem einer Abtrennvorrichtung 6 zugeführt, deren Ausgang mit einem Eingang der Zweitverarbeitungseinheit 2 verbunden ist.

Die Hauptverarbeitungseinheit 1 verarbeitet das erste Videosignal VS1 und stellt ein Hauptbildsignal A1, das die Information zum Aufbau der Zeilen des Hauptbildes HB enthält, zur Verfügung. Das erste Videosignal ist beispielsweise ein Fernsehsignal (FBAS) In der Hauptverarbeitungseinheit 1 erfolgt dann die Demodulation und Farbdecodierung des ersten Videosignals VS1. Das erste Videosignal kann beispielsweise auch von einem Computer oder einer anderen Videosignalquelle stammen. Die Hauptverarbeitungseinheit 1 kann dann unter Umständen entfallen.

Die Zweitverarbeitungseinheit 2 kann wie die Hauptverarbeitungseinheit 1 aufgebaut sein. Sie enthält zusätzlich eine Dezimationsschaltung, mit der ein über das zweite Videosignal übertragenes Bild in seinen Abmaßen z. B. durch Unterabtastung verkleinert wird. Die Abtrenneinrichtung 6 gewinnt aus dem zweiten Videosignal eine Information über das Bildformat des Zweitbildes. Diese wird der Zweitverarbeitungseinheit 2 übergeben, die mit dieser Information das Bildformatsignal FS erzeugt. Das Hauptbildsignal A1, das Signal für das Zweitbild A2 und das Bildformatsignal FS werden der Umschaltvorrichtung 3 übergeben. Die Umschaltvorrichtung 3 schaltet zwischen diesen Signalen so um, daß auf der Bildanzeigevorrichtung 5 das Hauptbild HB mit dem Einblendbild erscheint. Das Bildformatsignal FS entscheidet dabei, ob das gesamte Zweitbild ZB oder nur das Unterbild UB und ein Teil der Füllzeilen FZ oder nur das Unterbild UB in das Hauptbild HB eingeblendet werden. Nur bei einem bestimmten Pegel des Bildformatsignals FS werden die gerade zur Anzeige stehenden Zeilen des Zweitbildes ZB auch eingeblendet. Bei einem zweiten Pegel des Bildformatsignals FS wird die Einblendung dieser Zeilen unterdrückt. Die Zweitverarbeitungseinheit 2 liefert das Bildformatsignal FS mit den entsprechenden Pegeln, da in Abhängigkeit vom ermittelten Bildformat des Unterbildes UB nur die entsprechenden Zeilen des Zweitbildes ZB zur Anzeige gelangen.

Bei einem Ausführungsbeispiel nach Figur 2B sind die Hauptverarbeitungseinheit 1, die Zweitverarbeitungseinheit 2, die Umschaltvorrichtung 3, die Bildanzeigeansteuereinheit 4 und die Bildanzeigevorrichtung 5 wie bei dem Ausführungsbeispiel nach Figur 2A verschaltet. Anstelle der Abtrennvorrichtung 6 ist hier jedoch die Detektionsschaltung 7, der das dezimierte Signal für das Zweitbild A2 (Signalzweig 20 in Figur 2B) zugeführt wird, vorgesehen. Alternativ kann ihr auch das Signal für das Zweitbild A2, bevor es der Dezimierung unterworfen wird, zugeführt werden (Signalzweig 21, gestrichelt dargestellt).

Die Detektionsschaltung 7 bestimmt das Bildformat des Unterbildes UB nach dem Prinzip der weiter oben beschriebenen automatischen Letterbox-Detektion.

Aus den Zeilen des Zweitbildes ermittelt sie die Information über das Bildformat des Unterbildes UB. Diese Information wird an die Zweitverarbeitung 2 weitergegeben, die das Bildformat Signal FS erzeugt.
Dieses Ausführungsbeispiel ist vorzugsweise dann einzusetzen, wenn mit dem Fernsehsignal keine Information über das Bildformat des Unterbildes UB ausgestrahlt wird. Es eignet sich insbesondere dann, wenn die Füllzeilen FZ im oberen Bereich A und im unteren Bereich B des Zweitbildes ZB unterschiedlich groß sind. Durch entsprechende Programmierung der Detektionsschaltung 7 wird jedes beliebige Format erkannt, solange die Unterschiede zwischen den Bildzeilen BZ und den Füllzeilen FZ so groß sind, daß mittels einer Schwellwertschaltung zwischen beiden unterschieden werden kann. Mit Hilfe einer Signalverarbeitung kann eine Detektion auch noch bei geringfügigen Unterschieden zwischen den Füllzeilen FZ und den Bildzeilen BZ erreicht werden.

Ein weiteres Ausführungsbeispiel nach Figur 2C stimmt bezüglich der Blöcke 1, 2, 3, 4 und 5 mit denen des ersten Ausführungsbeispiels nach Figur 2A überein. Anstelle der Abtrennvorrichtung 6 ist hier eine Eingabevorrichtung 8 vorgesehen, die mit der Hauptverarbeitungseinheit 1 verbunden ist. Die Eingabevorrichtung 8 dient dazu, das Bildformat des Unterbildes UB direkt einzugeben. Ein Fernsehzuschauer wählt dazu beispielsweise mit einer Fernbedienung aus mehreren möglichen Bildformaten dasjenige aus, das er auf der Bildanzeigevorrichtung 5 als Unterbild UB wiedererkennt. Es ist auch denkbar, daß er alle vorgegebenen Bildformate eingibt und sich für dasjenige entscheidet, bei dem er nach seinen Vorstellungen den besten Bildeindruck hat. Im einfachsten Fall kann über die Eingabevorrichtung 8 zwischen zwei verschiedenen Bildformaten gewählt werden. So ist beispielsweise beim Einschalten eines Fernsehempfängers, der die Schaltungsanordnung enthält, als Bildformat für das Unterbild UB 4:3 voreingestellt. Durch Betätigung einer entsprechenden Taste an der Fernbedienung oder direkt am Fernsehempfänger wird auf das Bildformat 16:9 für das Unterbild UB umgeschaltet.

Bei den bisher beschriebenen Ausführungsbeispielen für die Schaltungsanordnungen liegen an den Eingängen der Umschaltvorrichtung 3 Signale an, die von der Bildanzeigeansteuereinheit 4 direkt verarbeitet werden können. Bei den Signalen handelt es sich um das Signal für die Zeilen des Hauptbildes HB und um das Signal für die Bildzeilen und die Füllzeilen des Zweitbildes ZB.

Bei einem Ausführungsbeispiel nach Figur 2D schaltet die Umschaltvorrichtung 3 unmittelbar zwischen dem ersten Videosignal VS1 und einem Einblendvideosignal VS2' um, das aus dem zweiten Videosignal VS2 durch Decodierung, Dezimierung und Codierung in einer Bilddezimationsschaltung 10 abgeleitet wird. Die Videosignale VS1 und VS2 sind beispielsweise jeweils ein FBAS-Signal (Farbbildabtastsynchron-Signal) oder ein Y/C-Signal (Luminanz/Chrominanz-Signal). Das Einblendvideosignal VS2', das synchron zum ersten Videosignal VS1 ist, überträgt ein verkleinertes Zweitbild. Die Bilddezimationsschaltung 10 erzeugt das Bildformatsignal FS.
Im Unterschied zu den zuvor in den Ausführungsbeispielen beschriebenen Schaltungsanordnungen erfolgt die Demodulation und Decodierung nicht vor, sondern nach der Umschaltvorrichtung 3. Eine gemeinsame Signalverarbeitungseinheit 9 ist eingangsseitig mit dem Ausgang der Umschaltvorrichtung 3 verbunden. Ihr wird ein drittes Videosignal VS3 zugeführt, das in der Umschaltvorrichtung 3 durch Verknüpfung des ersten Videosignals VS1 mit dem Einblendvideosignal VS2' gebildet wird.

Am Ausgang der Signalverarbeitungseinheit 9 liegt das Signal für die Zeilen des Hauptbildes und das Signal für die Bildzeilen und die Füllzeilen des Zweitbildes an. Die Bildanzeigeansteuereinheit 4 und die Bildanzeigevorrichtung 5 entsprechen denen der vorherigen Ausführungsbeispiele.

Die Abtrennvorrichtung 6 ist statt mit der Zweitverarbeitungseinheit 2 mit der Bilddezimationsschaltung 10 entsprechend dem Ausführungsbeispiel nach Figur 2A verbunden. Die prinzipielle Funktionsweise ist die gleiche.
Ausführungen bei Benutzung der Detektionsschaltung 7 oder bei Benutzung der Eingabevorrichtung 8 arbeiten hier entsprechend den Ausführungsbeispielen nach Figur 2B oder Figur 2C.

Es wird betont, daß die Erfindung nicht auf 4:3 oder 16:9-Bildformate beschränkt ist, sondern für beliebige Bildformate geeignet ist.
Das erste und das zweite Videosignal VS1, VS2 können auch RGB- oder YUV-Signale sein. Sie können auch in Form eines digitalen Datenstroms, z. B. nach dem MPEG-Standard, vorliegen.

## Patentansprüche

1. Verfahren zur Einblendung eines Einblendbildes in ein Hauptbild (HB) aus einem ersten Videosignal (VS1), bei dem ein Zweitbild (ZB) aus einem zweiten Videosignal (VS2) ein erstes Bildformat (4:3) aufweist und aus Bildzeilen (BZ) und Füllzeilen (FZ) zusammengesetzt ist,
wobei die Bildzeilen (BZ) ein Unterbild (UB) mit einem zweiten Bildformat (16:9) bilden, an das sich die Füllzeilen (FZ) in vertikaler Bildrichtung anschließen,
wobei die Füllzeilen (FZ) ermittelt werden und die Bildzeilen (BZ) und höchstens ein Teil der Füllzeilen (FZ) als Einblendbild in das Hauptbild (HB) eingeblendet werden,
**dadurch gekennzeichnet,**
**dass** das zweite Bildformat (16:9) des Unterbildes (UB) ermittelt und zur Ermittlung der Füllzeilen (FZ) verwendet wird,
wobei Zusatzeinblendungen (OSD) von einem Zusatzsignal, die zumindest teilweise innerhalb der Füllzeilen (FZ) liegen, in das Unterbild (UB) verschoben werden.

2. Verfahren nach Anspruch 1,
**dadurch gekennzeichnet,**
**dass** sich die Füllzeilen (FZ) oberhalb und unterhalb des Unterbildes (UB) anschließen und nur die Bildzeilen (BZ) und die oberen Füllzeilen oder nur die Bildzeilen (BZ) und die unteren Füllzeilen eingeblendet werden.

3. Verfahren nach einem der Ansprüche 1 bis 2,
**dadurch gekennzeichnet,**
**dass** die Füllzeilen (FZ) aus der Größe des Zweitbildes (ZB), dem ersten Bildformat (4:3) und dem zweiten Bildformat (16:9) bestimmt werden.

4. Verfahren nach Anspruch 3,
**dadurch gekennzeichnet,**
**dass** das zweite Bildformat (16:9) aus einer im zweiten Videosignal (VS2) enthaltenden Formatinformation oder aus dem Bildinhalt des Zweitbildes (ZB) mittels Bildverarbeitung ermittelt wird.

5. Verfahren nach Anspruch 3,
**dadurch gekennzeichnet,**
**dass** Angaben über ein mögliches zweites Bildformat (ZB) über eine Eingabevorrichtung (8) vorgewählt werden.

6. Verfahren nach einem der Ansprüche 1 bis 5,
**dadurch gekennzeichnet,**
**dass** das zweite Bildformat (16:9) des Unterbildes (UB) in horizontaler und/oder vertikaler Bildrichtung zu einem dritten, vom zweiten Bildformat (16:9) verschiedenen Format geändert wird.

7. Schaltungsanordnung zur Einblendung eines Einblendbildes in ein Hauptbild (HB) aus einem ersten Videosignal (VS1) mit
- einer Hauptverarbeitungseinheit (1), der das erste Videosignal (VS1) zuführbar ist und mit der ein Signal für die Zeilen des Hauptbildes erzeugbar ist,
- einer Zweitverarbeitungseinheit (2), der ein zweites Videosignal (VS2) zuführbar ist und mit der ein Signal für Bildzeilen (BZ) und Füllzeilen (FZ) eines Zweitbildes (ZB), das ein erstes Bildformat (4:3) aufweist und zur Einblendung in das Hauptbild (HB) geeignet ist, erzeugbar ist, wobei die Bildzeilen ein Unterbild (UB) mit einem zweiten Bildformat (16:9) bilden, an das sich die Füllzeilen (FZ) in vertikaler Bildrichtung anschließen,
- einer Formaterkennungsschaltung (6, 7, 8) zur Ermittlung des zweiten Bildformats (16:9) des Unterbildes (UB) und zur Erzeugung eines Bildformatsignals (FS), das eine Information über das zweite Bildformat des Unterbildes (UB) enthält, und die ausgangsseitig mit der zweiten Verarbeitungseinheit (2) verbunden ist,
- einer Umschaltvorrichtung (3), die eingangsseitig mit der Hauptverarbeitungseinheit (1) und der Zweitverarbeitungseinheit (2) verbunden ist und die an einem Ausgang entweder das Signal für die Zeilen des Hauptbildes (HB) oder das Signal für die Bildzeilen (BZ) und höchstens einen vom Bildformatsignal (FS) bestimmten Teil der Füllzeilen (FZ) des Zweitbildes (ZB) zur Verfügung stellt, und
- eine Bildanzeigeansteuereinheit (4), die mit dem Ausgang der Umschaltvorrichtung (3) verbunden ist und ein Bildansteuersignal erzeugt, mit dem eine Bildanzeigevorrichtung (5) zur Darstellung des Hauptbildes (HB) und des Einblendbildes ansteuerbar ist,
wobei die Umschaltvorrichtung (3) derart ausgestaltet ist, dass sie das Signal für die Bildzeilen (BZ) derart an dem Ausgang zur Verfügung stellt, dass Zusatzeinblendungen (OSD) von einem Zusatzsignal, die zumindest teilweise innerhalb der Füllzeilen (FZ) liegen, in das Unterbild (UB) verschoben werden.

8. Schaltungsanordnung nach Anspruch 7,
**dadurch gekennzeichnet,**
**dass** die Formaterkennungsschaltung eine Abtrennvorrichtung (6) zum Abtrennen von Daten mit der Information über das zweite Bildformat (16:9) aus dem zweiten Videosignal (VS2) enthält.

9. Schaltungsanordnung nach Anspruch 7,
**dadurch gekennzeichnet,**
**dass** die Formaterkennungsschaltung (7) die Anzahl der Füllzeilen als Information über das zweite Bildformat (16:9) ermittelt.

10. Schaltungsanordnung nach Anspruch 7,
**dadurch gekennzeichnet,**
**dass** die Formaterkennungsschaltung (7) eine Eingabevorrichtung (8) zur Eingabe der Information über das zweite Bildformat (16:9) enthält.

## Claims

1. A method for inserting an insertion picture into a main picture (HB) from a first video signal (VS1), in which a second picture (ZB) from a second video signal (VS2) has a first picture format (4:3) and is composed of picture lines (BZ) and filling lines (FZ),
the picture lines (BZ) forming a sub-picture (UB) with a second picture format (16:9) which is adjoined by the filling lines (FZ) in the vertical picture direction,
the filling lines (FZ) being determined and the picture lines (BZ) and at most a portion of the filling lines (FZ) being inserted as insertion picture into the main picture (HB),
**characterized**
**in that** the second picture format (16:9) of the sub-picture (UB) is determined and used for determining the filling lines (FZ), additional insertions (OSD) from an additional signal, which at least partly lie within the filling lines (FZ), being displaced into the sub-picture (UB).

2. The method as claimed in claim 1,
**characterized**
**in that** the filling lines (FZ) adjoin the top and bottom of the sub-picture (UB) and only the picture lines (BZ) and the upper filling lines or only the picture lines (BZ) and the lower filling lines are inserted.

3. The method as claimed in any one of claims 1 to 2,
**characterized**
**in that** the filling lines (FZ) are determined from the size of the second picture (ZB), the first picture format (4:3) and the second picture format (16:9).

4. The method as claimed in claim 3,
**characterized**
**in that** the second picture format (16:9) is determined from a format information item contained in the second video signal (VS2) or from the picture content of the second picture (ZB) by means of picture processing.

5. The method as claimed in claim 3,
**characterized**
**in that** details about a possible second picture format (ZB) are preselected by means of an input device (8).

6. The method as claimed in any one of claims 1 to 5,
**characterized**
**in that** the second picture format (16:9) of the sub-picture (UB) is changed in the horizontal and/or vertical picture direction to form a third format, different from the second picture format (16:9).

7. A circuit arrangement for inserting an insertion picture into a main picture (HB) from a first video signal (VS1) having
- a main processing unit (1), to which the first video signal (VS1) can be fed and which can generate a signal for the lines of the main picture,
- a second processing unit (2), to which a second video signal (VS2) can be fed and which can generate a signal for picture lines (BZ) and filling lines (FZ) of a second picture (ZB), which has a first picture format (4:3) and is suitable for insertion into the main picture (HB), the picture lines forming a sub-picture (UB) with a second picture format (16:9) which is adjoined by the filling lines (FZ) in the vertical picture direction,
- a format identification circuit (6, 7, 8) for determining the second picture format (16:9) of the sub-picture (UB) and for generating a picture format signal (FS), which contains an item of information about the picture format of the sub-picture (UB), which circuit is connected to the second processing unit (2) on the output side,
- a changeover device (3), which, on the input side, is connected to the main processing unit (1) and to the second processing unit (2) and, at an output, provides either the signal for the lines of the main picture (HB) or the signal for the picture lines (BZ) and at most a portion of the filling lines (FZ) of the second picture (ZB), said portion being determined by the picture format signal (FS), and
- a picture display drive unit (4), which is connected to the output of the changeover device (3) and generates a picture drive signal which can drive a picture display device (5) for representing the main picture (HB) and the insertion picture, the changeover device (3) being designed such that it provides the signal for the picture lines (BZ) at the output such that additional insertions (OSD) from an additional signal, which at least partly lie within the filling lines (FZ), are displaced into the sub-picture (UB).

8. The circuit arrangement as claimed in claim 7,
**characterized**
**in that** the format identification circuit contains a separation device (6) for separating data with the information about the second picture format (16:9) from the second video signal (VS2).

9. The circuit arrangement as claimed in claim 7,
**characterized**
**in that** the format identification circuit (7) determines the number of filling lines as information about the second picture format (16:9).

10. The circuit arrangement as claimed in claim 7,
**characterized**
**in that** the format identification circuit (7) contains an input device (8) for inputting the information about the second picture format (16:9).

## Revendications

1. Procédé de superposition d'une image superposé dans une image principale (HB) constituée d'un premier signal vidéo (VS1), dans lequel une image secondaire (ZB), constituée d'un deuxième signal vidéo (VS2), possède un premier format d'image (4:3) et est constitué de lignes de balayage (BZ) et de lignes de remplissage (FZ), de sorte que les lignes d'image (BZ) constituent une sous-image (UB) avec un deuxième format d'image (16:9) dans lequel les lignes de remplissage (FZ) se raccordent sur la direction verticale de l'image, de sorte que les lignes de remplissage (FZ) sont détectées et les lignes de balayage (BZ) et au plus une partie des lignes de remplissage (FZ) sont superposées dans l'image principale (HB) en tant qu'image superposée, **caractérisé en ce que** le deuxième format d'image (16:9) de la sous-image (UB) est détecté et est utilisé pour la détection des lignes de remplissage (FZ), de sorte que des superpositions supplémentaires (OSD), qui se trouvent au moins partiellement à l'intérieur des lignes de remplissage (FZ), sont décalées dans la sous-image (UB) par un signal supplémentaire.

2. Procédé selon la revendication 1, **caractérisé en ce que** les lignes de remplissage (FZ) se raccordent au-dessus ou en dessous de la sous-image (UB) et seules les lignes de balayage (BZ) et les lignes de remplissage supérieures ou seules les lignes de balayage (BZ) et les lignes de remplissage inférieures sont superposées.

3. Procédé selon l'une des revendications 1 à 2, **caractérisé en ce que** les lignes de remplissage (FZ) sont déterminées à partir de la taille de l'image secondaire (ZB), du premier format d'image (4:3) et du deuxième format d'image (16:9).

4. Procédé selon la revendication 3, **caractérisé en ce que** le deuxième format d'image (16:9) est déterminé à partir d'une information de format contenue dans un deuxième signal vidéo (VS2) ou à partir du contenu de l'image secondaire (ZB) à l'aide d'un traitement d'image.

5. Procédé selon la revendication 3, **caractérisé en ce que** des indications sur un éventuel deuxième format d'image (ZB) sont présélectionnées par l'intermédiaire d'un dispositif d'entrée (8).

6. Procédé selon l'une des revendications 1 à 5, **caractérisé en ce que** le deuxième format d'image (16:9) de la sous-image (UB) est converti, dans la direction horizontale et/ou verticale de l'image, en un troisième format différent du deuxième format d'image (16:9).

7. Circuit de superposition d'une image superposée dans une image principale (HB) constituée d'un premier signal vidéo (VS1) comprenant :
- une unité de traitement principale (1), dans laquelle le premier signal vidéo (VS1) peut être entré et avec laquelle un signal peut être généré pour les lignes de l'image principale,
- une unité de traitement secondaire (2) dans laquelle un deuxième signal vidéo (VS2) peut être entré et avec laquelle un signal pour les lignes de balayage (BZ) et les lignes de remplissage (FZ) d'une image secondaire (ZB), qui présente un premier format d'image (4:3) et qui est adapté à la superposition dans l'image principale (HB), peut être généré, de sorte que les lignes de balayage constituent une sous-image (UB) avec un deuxième format d'image (16:9), auquel les lignes de remplissage (FZ) se raccordent dans la direction verticale de l'image,
- un circuit de reconnaissance de format (6, 7, 8) pour la détection d'un deuxième format d'image (16:9) de la sous-image (UB) et pour la production d'un signal de format d'image (FS) qui contient une information sur le deuxième format d'image de la sous-image (UB) et qui est raccordé à la sortie à une deuxième unité de traitement (2),
- un dispositif de commutation (3) relié du côté de l'entrée à l'unité de traitement principale (1) et à l'unité de traitement secondaire (2) et qui, à une sortie, produit soit le signal pour les lignes de l'image principale (HB) soit le signal pour les lignes de balayage (BZ) et au plus une partie déterminée du signal de format d'image (FS) des lignes de remplissage (FZ) de l'image secondaire (ZB), et
- une unité de commande d'affichage d'image (4) reliée à la sortie du dispositif de commutation (3) et qui produit un signal de commande d'affichage avec lequel un dispositif d'affichage d'image (5) peut être commandé pour afficher l'image principale (HB) et l'image superposée,
dans lequel le dispositif de commutation (3) est conçu de façon à ce que qu'il produise, en sortie, le signal pour les lignes de balayage (BZ), de telle sorte que des superpositions supplémentaires (OSD), qui se trouvent au moins partiellement à l'intérieu des lignes de remplissage (FZ), sont décalées dans la sous-image (UB) par un signal supplémentaire.

8. Circuit selon la revendication 7, **caractérisé en ce que** le circuit de reconnaissance de format contient un dispositif de séparation (6) pour séparer les données de l'information sur le deuxième format d'image (16:9) constitué du deuxième signal vidéo (VS2).

9. Circuit selon la revendication 7, **caractérisé en ce que** le circuit de reconnaissance de format (7) détermine le nombre des lignes de remplissage en tant qu'information sur le deuxième format d'image (16:9).

10. Circuit selon la revendication 7, **caractérisé en ce que** le circuit de reconnaissance du format (7) contient un dispositif d'entrée (8) pour l'entrée de l'information sur le deuxième format d'image (16:9).
